# EUROPÄISCHE PATENTSCHRIFT

(11) **EP 1 704 906 B1**
(45) Veröffentlichungstag und Bekanntmachung des Hinweises auf die Patenterteilung: **08.06.2011**
(21) Anmeldenummer: 05008531.5
(22) Anmeldetag: 19.04.2005
(51) Int. Cl.: B01D 3/32

(54) **Stoffaustausch-Kolonne mit Austauschböden**
Mass transfer column with transfer trays
Colonne de transfert de masse à plateaux de transfert

(30) Priorität: 24.03.2005 DE 102005013855
(43) Veröffentlichungstag der Anmeldung: 27.09.2006
(73) Patentinhaber: Linde AG, 80331 München (DE)
(72) Erfinder: Hieringer, Stefan, 84518 Garching/Alz (DE); Moll, Anton, 82399 Raisting (DE)
(74) Vertreter: Imhof, Dietmar

(56) Entgegenhaltungen:
- EP-A- 0 706 810
- GB-A- 2 051 086
- US-A- 4 738 807

## Beschreibung

Die Erfindung betrifft eine Kolonne für den Stoffaustausch zwischen einer Flüssigkeit und einem Gas mit mindestens einem Paar benachbarter Austauschböden, das durch einen oberen Austauschboden und einen unteren Austauschboden gebildet wird, mit einem Ablaufschacht zum Überleiten von Flüssigkeit und mit einer Einlaufschale, die unterhalb des unteren Endes des Ablaufschachts angeordnet und deren Boden gegenüber der Oberfläche des unteren Austauschbodens vertieft ist.

Derartige Bodenkolonnen werden häufig für Stoffaustauschprozesse eingesetzt, insbesondere als Waschsäulen oder als Rektifiziersäulen für die Gastrennung. Ihr grundsätzlicher Aufbau ist zum Beispiel in Winnacker - Küchler, Chemische Technologie, Band 7, 3. Auflage (1975), Abschnitt 3.35, Seiten 196 bis 200 beschrieben.

Es sind verschiedene Typen von Austauschböden bekannt wie beispielsweise Siebböden, Glockenböden oder Ventilböden. Die Erfindung ist auf alle Bodentypen anwendbar.

In so genannten Querstrom-Bodenkolonnen läuft die Flüssigkeit quer zum aufsteigenden Gas über einen oberen Austauschboden und fließt anschließend über einen oder mehrere Ablaufschächte zum darunterliegenden unteren Austauschboden ab. Auf den Austauschböden bildet die vom Gas durchströmte Flüssigkeit eine Sprudelschicht, in der Gas und Flüssigkeit in intensiven direkten Stoffaustausch treten.

Unter "Oberfläche" des Bodens wird diejenige Ebene verstanden, welche die quer über den Boden strömende Flüssigkeit, die in Stoffaustausch mit dem aufsteigenden Gas steht, abhält, direkt nach unten abzufließen und damit die untere Grenzfläche der Sprudelschicht definiert. Bei einem Siebboden wird sie zum Beispiel durch die Oberfläche des Lochblechs gebildet, aus dem dieser üblicherweise gefertigt ist.

Die räumlichen Begriffe "oben", "unten", "vertikal" usw. beziehen sich hier auf die Orientierung der Kolonne während des Betriebs.

Da der Druck in der Bodenkolonne von oben nach unten steigt, ist er im Dampfraum des unteren Bodens höher als am oberen Boden. Die Flüssigkeit staut sich daher im Ablaufschacht so weit auf, bis das Gewicht der gestauten Flüssigkeitssäule ausreicht, um die Flüssigkeit in den Dampfraum des unteren Bodens zu befördern. Diese Rückstauhöhe bestimmt in vielen Fällen den erforderlichen Bodenabstand und damit die Kolonnenhöhe.

Die Rückstauhöhe der Flüssigkeit in dem Ablaufschacht wird von mehreren Faktoren bestimmt.

Den größten Anteil für die Rückstauhöhe liefert in der Regel der Druckverlust des Bodens. Diesen Druckverlust erleidet das aufsteigende Gas beim Strömen vom unteren Austauschboden durch die Austauschelemente des oberen Austauschbodens und beim Überwinden der hydrostatischen Höhe der Sprudelschicht des oberen Austauschbodens.

In der Regel kleinere Anteile zur Rückstauhöhe im Schacht liefert der Reibungsterm, das ist derjenige Term, der erforderlich ist, die Flüssigkeit durch einen Austrittsspalt oder durch mehrere Austrittsöffnungen auf den unteren Austauschboden zu drücken. Bei Austauschböden, die ein Einlaufwehr auf den unteren Boden aufweisen, das einen statischen Flüssigkeitsverschluss des Schachts in jedem Betriebsfall sicherstellt, kann dieses einen wesentlichen Anteil der gesamten Aufstauhöhe verursachen.

Dieser zusätzliche Anteil an der Rückstauhöhe wird in vielen modernen Böden vermieden, indem auf einen statischen Flüssigkeitsverschluss verzichtet und kein Einlaufwehr verwendet wird, oder indem die Austrittsöffnungen des Schachts oberhalb der Sprudelschicht angeordnet sind. Der Schachtverschluss wird dann dynamisch durch den Druckverlust, der an den Austrittsöffnungen entsteht, hergestellt.

Außerdem ist aus Mayfield et al., Journal of Industrial and Engineering Chemistry (1952), 44, 2238-49 (Figur 13) bekannt, unter dem Ablaufschacht eine vertiefte Ablaufschale unterhalb des Ablaufschachts anzuordnen und damit einen statischen Flüssigkeitsverschluss ohne Einlaufwehr herzustellen. Dies verursacht aber einen relativ hohen Aufwand bei der Herstellung der Kolonne.

Der Erfindung liegt daher die Aufgabe zugrunde, eine Bodenkolonne mit vertieftem Einlaufsdhacht anzugeben, die besonders kostengünstig herzustellen ist und gleichzeitig verfahrenstechnisch vorteilhaft funktioniert.

Diese Aufgabe wird dadurch gelöst, dass die vertiefte Einlaufschale so ausgebildet ist, dass sie sich nur über einen Teil des Querschnitts des unteren Endes des Ablaufschachts erstreckt.

Im Rahmen der Erfindung hat sich herausgestellt, dass für das Auslaufen der Flüssigkeit aus dem Ablaufschlacht auf den unteren Austauschboden eine relative kleine Durchtrittsfläche ausreicht. Es ist also - entgegen der Lehre des Standes der Technik - nicht notwendig, den ganzen Ablaufschacht in die vertiefte Schale abzutauchen. Es genügt vielmehr eine Vertiefung im Boden im Bereich des Durchtrittsspalts. Diese Vertiefung lässt sich auf einfache und kostengünstige Weise durch eine gefaltete Blechschale realisieren. Diese kann mittels einfacher Verbindungselemente, beispielsweise Nieten mit dem Austauschboden verbunden werden. Spezieller Aufwand zum Abdichten der Einlaufschale gegenüber der Kolonnenwand wird damit unnötig. Dennoch kann der günstige Effekt der vertieften Einlaufschale für die Rückstauhöhe im Ablaufschacht und damit für die Bauhöhe der gesamten Kolonne genutzt werden.

Die Einlaufschale erstreckt sich beispielsweise über 20 % bis 60 % der unteren Querschnittsfläche des Ablaufschachts, vorzugsweise über 25 % bis 40 %.

Vorzugsweise endet der Ablaufschacht oberhalb der Oberfläche des unteren Austauschbodens. Hierdurch bildet die Einlaufschale alleine keinen statischen Flüssigkeitsverschluss mehr aus. Dies kann grundsätzlich durch übliche Maßnahmen zur Herstellung eines dynamischen Flüssigkeitsverschlusses durch entsprechend gestaltete Austrittsöffnungen des Ablaufschachts ausgeglichen werden.

Günstiger ist es jedoch, wenn stattdessen ein Einlaufwehr an der dem unteren Austauschboden zugewandten Kante der Einlaufschale angeordnet ist, das einen statischen Flüssigkeitsverschluss herstellt.

Im Rahmen der Erfindung kann dieses Einlaufwehr jedoch sehr niedrig ausgebildet sein. Insbesondere ist es günstig, wenn seine Höhe geringer, gleich oder nicht wesentlich höher als die Höhe des Ablaufwehrs des unteren Austauschbodens ist. Unter "nicht wesentlich höher" ist hier eine Überschreitung der Ablaufwehrhöhe um 50 % oder weniger, vorzugsweise um 20 % oder weniger, höchst vorzugsweise um 10 % oder weniger beziehungsweise um 5 % oder weniger gemeint. Das Einlaufwehr ist damit niedriger als die Höhe der Sprudelschicht auf dem unteren Austauschboden im Normalbetrieb. Ein statischer Flüssigkeitsverschluss wird so durch ein Zusammenwirken der vertieften Einlaufschale mit einem niedrigen Einlaufwehr bewirkt, ohne dass diese Maßnahme zu einer wesentlichen Vergrößerung der Rückstauhöhe beiträgt. Im Gegensatz zu dynamischen Flüssigkeitsabschlüssen ist die Kolonne dennoch für einen großen Lastbereich geeignet. Die Höhe des Einlaufwehrs kann insbesondere die Unterkante der Ablaufschachtwand um 0 bis 20 mm, vorzugsweise um 0 bis 10 mm überdecken.

Unter "Normalbetrieb" wird hier ein Betreiben der Kolonne mit einer Gas- und Flüssigkeitsbelastung verstanden, die in dem Lastbereich liegen, für den die Kolonne ausgelegt ist.

Mit Hilfe der Vertiefung wird ein relativ geringer Bodenabstand möglich. Bei hohen Gasbelastungen mit stark expandierender Sprudelschicht kann der vertiefte Einlauf des oberen Austauschbodens das Ablaufen der Zweiphasenschicht vom unteren Austauschboden behindern. Dieser Nachteil kann vermieden oder zumindest vermindert werden, indem sich der Ablaufschacht nach unten verjüngt, insbesondere dadurch, dass die dem unteren Boden zugewandte Wand des Ablaufschachts schräg zur Vertikalen angeordnet ist. Die Querschnittsfläche des unteren, verjüngten Endes des Ablaufschachts beträgt beispielsweise 10 % bis 80 % der Querschnittsfläche des oberen Endes des Ablaufschachts, vorzugsweise 30 % bis 50 %.

Die Erfindung ist selbstverständlich analog auf mehrflutige Böden anwendbar, bei denen mehr als ein Ablaufschacht zwischen einem Paar benachbarter Austauschböden vorgesehen ist.

Die Erfindung sowie weitere Einzelheiten der Erfindung werden im Folgenden anhand von in den Zeichnungen dargestellten Ausführungsbeispielen näher erläutert. Hierbei zeigen:
- Figur 1: einen Teilquerschnitt einer erfindungsgemäßen Kolonne in einer ersten Ausführungsform und
- Figur 2: eine zweite Ausführungsform mit Verjüngung des Ablaufschachts.

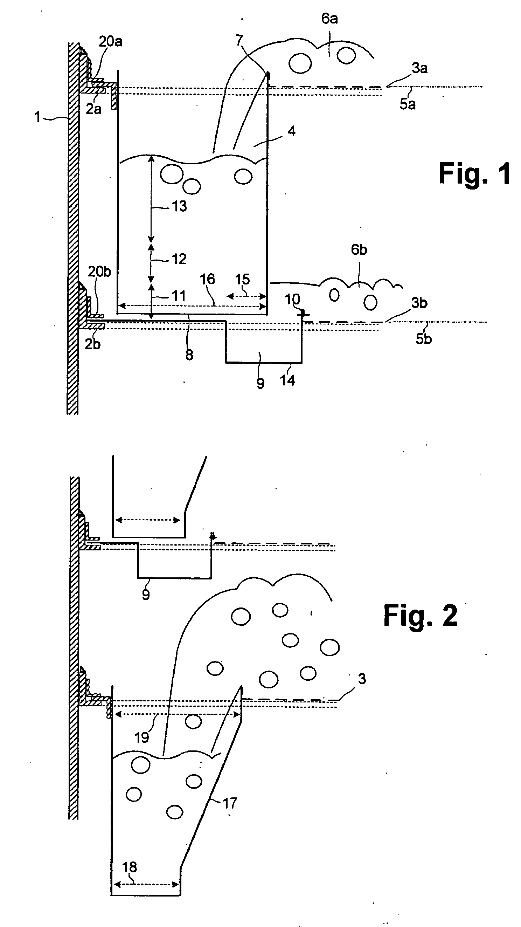

Figur 1 zeigt einen Teil einer Stoffaustausch-Kolonne im Querschnitt. An der Innenseite der Kolonnenwand 1 sind für jeden Boden eine ringförmiges Blindblech 2a/2b und ein oberer ringförmiger Klemmwinkel 20a/20b angeheftet. Dies halten einen oberen Austauschboden 3a beziehungsweise einen unterer Austauschboden 3b mit jeweiligem Ablaufschacht 4 (in der Zeichnung nur für den oberen Boden dargestellt) und Einlaufschale 9 (in der Zeichnung nur für den unteren Boden dargestellt). Die Austauschböden 3a, 3b sind in dem Beispiel als Siebböden ausgebildet. Ihre "Oberfläche" verläuft in der durch die Linien 5a, 5b angezeigten Ebene.

Während des Betriebs der Kolonne bildet sich auf dem oberen Austauschboden 3a eine Sprudelschicht 6a aus. Während das aufsteigende Gas durch die Öffnungen des Austauschbodens einströmt und in der Sprudelschicht 6a nach oben steigende Blasen bildet, strömt die Flüssigkeit quer dazu (nach links in der Zeichnung) über den oberen Austauschboden 3a. Sie läuft schließlich über ein Ablaufwehr 7 in den Ablaufschacht 4 aus. In dem Ablaufschacht bildet sich ein Rückstau aus, dessen hydrostatischer Druck die Flüssigkeit aus dessen unterem Ende durch eine Einlaufschale 9 und über ein Einlaufwehr 10 auf den unteren Austauschboden 3b befördert, auf dem sich in derselben Weise eine Sprudelschicht 6b ausbildet.

Die Rückstauhöhe setzt sich aus den folgenden Anteilen zusammen:
- 11: Statische Höhe der Sprudelschicht auf dem Boden 3b
- 12: Reibung/Durchtrittswiderstand
- 13: Druckverlustanteil (Druckverlust der Gasströmung am oberen Boden 3a)

Ein separater Term für das Einlaufwehr 10 entfällt, da dessen Oberkante unterhalb der Oberfläche der Sprudelschicht 6b während des Normalbetriebs der Kolonne angeordnet ist. Dies ist dann der Fall, wenn die Höhe des Einlaufwehrs 10 über der Oberfläche 5b des Austauschbodens 3b geringer, gleich oder nicht wesentlich höher als die Höhe des Ablaufwehrs desselben Bodens ist.

Der Boden 14 der Einlaufschale 9 befindet sich unterhalb der Oberfläche 5b des unteren Austauschbodens 3b. Sie überdeckt nur einen Teil 15 des Gesamtquerschnitts 16 des unteren Endes des Ablaufschachts 4, in dem Beispiel etwa ein Viertel. Die Einlaufschale 9 kann dadurch auf einfache Weise mit dem Austauschboden 3b und gemeinsam mit diesem über die Auflage 2b mit der Kolonnenwand 1 verbunden werden. Eine separate Aufhängung und Abdichtung der Einlaufschale 9 ist nicht erforderlich.

Wenn bei hohen Gasbelastungen und geringen Bodenabständen die Sprudelschicht 6b fast den gesamten Zwischenraum zwischen den beiden Austauschböden 3a, 3b ausfüllt, behindert die Einlaufschale des oberen Bodens (in Figur 1 nicht dargestellt) möglicherweise das Ablaufen der Flüssigkeit vom unteren Austauschboden 3b. Insbesondere diesem Fall bietet die in Figur 2 gezeigte Ausführungsform der Erfindung weitere Vorteile.

Während in dem Beispiel von Figur 1 sämtliche Wände des Ablaufschachts vertikal angeordnet sind, ist in der Variante von Figur 2 zumindest die dem unteren Austauschboden 3 zugewandte Wand gegenüber der Vertikalen geneigt. Hierdurch verjüngt sich der Ablaufschacht 4 nach unten. Der Querschnitt 18 des unteren Endes beträgt in dem Beispiel etwa 50 % des oberen Querschnitts 19 des Ablaufschachts. Die Einlaufschale 9 überdeckt nur einen Teil dieses verringerten Querschnitts 18.

Grundsätzlich könnte auch die äußere, der Wand 17 gegenüberliegende Wand des Ablaufschachts nicht parallel zur Kolonnenwand, sondern geneigt eingebaut sein. Die Neigungsrichtung wäre dann entgegengesetzt zur Wand 17 in Figur 2 und maximal so stark ausgebildet, dass die untere Kante dieser Wand an der (in der Zeichnung linken) Kante der Einlaufschale 9 endet.

## Patentansprüche

1. Kolonne für den Stoffaustausch zwischen einer Flüssigkeit und einem Gas mit mindestens einem Paar benachbarter Austauschböden, das durch einen oberen Austauschboden (3a) und einen unteren Austauschboden (3b) gebildet wird, mit einem Ablaufschacht (4) zum Überleiten von Flüssigkeit und mit einer Einlaufschale (9), die unterhalb des unteren Endes des Ablaufschachts (4) angeordnet und deren Boden (14) gegenüber der Oberfläche (5b) des unteren Austauschbodens (3b) vertieft ist, **dadurch gekennzeichnet, dass** die vertiefte Einlaufschale (9) so ausgebildet ist, dass sie sich nur über einen Teil (15) des Querschnitts (16) des unteren Endes des Ablaufschachts (4) erstreckt.

2. Kolonne nach Anspruch 1, **dadurch gekennzeichnet, dass** der Ablaufschacht (4) oberhalb der Oberfläche (5b) des unteren Austauschbodens (3b) endet.

3. Kolonne nach Anspruch 1 oder 2, **dadurch gekennzeichnet, dass** an der dem unteren Austauschboden (3b) zugewandten Kante der Einlaufschale (9) ein Einlaufwehr (19) angeordnet ist.

4. Kolonne nach Anspruch 3, **dadurch gekennzeichnet, dass** der untere Austauschboden ein Ablaufwehr (7) aufweist und die Höhe des Einlaufwehrs (10) geringer, gleich oder nicht wesentlich höher als die Höhe des Ablaufwehrs (7) ist.

5. Kolonne nach einem der Ansprüche 1 bis 4, **dadurch gekennzeichnet, dass** sich der Ablaufschacht (4) nach unten verjüngt.

6. Kolonne nach Anspruch 5, **dadurch gekennzeichnet, dass** die Verjüngung (4) mindestens teilweise dadurch bewirkt wird, dass die dem unteren Boden zugewandte Wand (17) des Ablaufschachts (4) schräg zur Vertikalen angeordnet ist.

## Claims

1. Column for mass transfer between a liquid and a gas, having at least one pair of adjacent transfer plates, which is formed by an upper transfer plate (3a) and a lower transfer plate (3b), having an outlet shaft (4) for passing over liquid, and having an inlet shell (9), which is arranged beneath the lower end of the outlet shaft (4) and the base (14) of which is recessed with respect to the surface (5b) of the lower transfer plate (3b), **characterized in that** the recessed inlet shell (9) is designed in such a way that it extends only over part (15) of the cross section (16) of the lower end of the outlet shaft (4).

2. Column according to Claim 1, **characterized in that** the outlet shaft (4) ends above the surface (5b) of the lower transfer plate (3b).

3. Column according to Claim 1 or 2, **characterized in that** an inlet weir (19) is arranged at that edge of the inlet shell (9) which faces the lower transfer plate (3b).

4. Column according to Claim 3, **characterized in that** the lower transfer plate has an outlet weir (7), and the height of the inlet weir (10) is less than, equal to or not significantly greater than the height of the outlet weir (7).

5. Column according to any of Claims 1 to 4, **characterized in that** the outlet shaft (4) narrows in the downward direction.

6. Column according to Claim 5, **characterized in that** the narrowing (4) is at least partially effected by virtue of that wall (17) of the outlet shaft (4) which faces the lower plate being arranged obliquely with respect to the vertical.

## Revendications

1. Colonne d'échange de matière entre un liquide et un gaz, la colonne présentant au moins deux plateaux d'échange voisins formés d'un plateau supérieur d'échange (3a) et d'un plateau inférieur d'échange (3b), avec un puits de sortie (4) qui transfère le liquide et une coquille d'entrée (9) disposée en dessous de l'extrémité inférieure du puits de sortie (4) et dont le fond (14) est en creux par rapport à la surface (5b) du plateau inférieur d'échange (3b),
**caractérisée en ce que**
la coquille d'entrée (9) en creux est configurée de manière à ne s'étendre que sur une partie (15) de la section transversale (16) de l'extrémité inférieure du puits de sortie (4).

2. Colonne selon la revendication 1, **caractérisée en ce que** le puits de sortie (4) se termine au-dessus de la surface (5b) du plateau inférieur d'échange (3b).

3. Colonne selon les revendications 1 ou 2, **caractérisée en ce qu'**un obstacle d'entrée (19) est disposé sur le bord de la coquille d'entrée (9) tourné vers le plateau inférieur d'échange (3b).

4. Colonne selon la revendication 3, **caractérisée en ce que** le plateau inférieur d'échange présente un obstacle de sortie (7) et **en ce que** la hauteur de l'obstacle d'entrée (10) est inférieure, égale ou non essentiellement supérieure à la hauteur de l'obstacle de sortie (7).

5. Colonne selon l'une des revendications 1 à 4, **caractérisée en ce que** le puits de sortie (4) se rétrécit vers le bas.

6. Colonne selon la revendication 5, **caractérisée en ce que** le rétrécissement (4) est obtenu au moins en partie en disposant la paroi (17) du puits de sortie (4) tournée vers le plateau inférieur en position oblique par rapport à la verticale.
